# EUROPÄISCHE PATENTSCHRIFT

(11) **EP 1 045 236 B1**
(45) Veröffentlichungstag und Bekanntmachung des Hinweises auf die Patenterteilung: **27.03.2002**
(21) Anmeldenummer: 99124447.6
(22) Anmeldetag: 08.12.1999
(51) Int. Cl.: G01L 9/10, G01F 11/08, F04B 43/00, F16K 17/36, G05D 1/02

(54) **Wasserschalter**
Water flow controler
Controleur de débit d'eau

(30) Priorität: 25.02.1999 DE 19908156
(43) Veröffentlichungstag der Anmeldung: 18.10.2000
(73) Patentinhaber: HeaTec Thermotechnik GmbH, 73066 Uhingen (DE)
(72) Erfinder: Schwarz, Hans-Jochen, Dr., 73614 Schorndorf (DE); Stengel, Peter, 73235 Weilheim/Teck (DE)
(74) Vertreter: Patentanwälte Rüger, Barthelt & Abel

(56) Entgegenhaltungen:
- WO-A-81/02629
- WO-A-93/07389
- GB-A- 2 190 657

## Beschreibung

Die Erfindung betrifft einen Durchflussfühler, insbesondere zur Erfassung von Wasserströmen.

In vielen Fällen, insbesondere an Gasgeräten oder ähnlichen Einrichtungen ist es erforderlich einen Wasserstrom zu erfassen. Insbesondere ist es häufig erforderlich, sicher zu erfassen, ob ein vorhandener Wasserstrom einen Grenzwert überschreitet oder nicht. Der Grenzwert muss dabei relativ genau eingehalten werden. Bspw. wenn solche Wasserschalter an Geräten zur Wassererwärmung benutzt werden, darf ein Brenner nur dann eingeschaltet werden, wenn ausreichend Wasser zufließt. Wird bei einem zu geringen Wasserstrom ein Signal zum Starten des Brenners abgegeben, kann dies Gefahrensituationen zur Folge haben. Umgekehrt soll aber ein Signal, das einen ausreichend fließenden Wasserstrom anzeigt, sicher abgegeben werden, sobald die erforderliche Wasserstromstärke erreicht ist. Ansonsten besteht Gefahr, dass die Warmwassererzeugung ausfällt, wenn der Wasserstrom gedrosselt wird.

Wasserschalter werden als Zulieferteile in großer Stückzahl, bspw. für gasbetriebene, im Durchlauf betriebene Warmwasserbereiter und ähnliche Geräte verwendet. Es kommt deshalb darauf an, dass die Wasserschalter problemlos in zuweilen auch unterschiedliche Gerätetypen integrierbar sind. In jedem Fall aber sollen sie verlässlich arbeiten und kostengünstig angeboten werden können. Jedoch kann es auch in anderen Fällen darauf ankommen, einen Durchfluss zu erfassen.

Aus der GB 2 190 657 A sowie der WO 81/02629 ist ein Durchflussmesser bekannt, der ein Gehäuse aufweist, dessen Innenraum durch eine flexible Membran in zwei Arbeitskammern unterteilt ist. Die Membran trägt einen Dauermagnet. An beiden gegenüberliegenden Seiten des Gehäuses sind Magnetsensoren angeordnet um zu erfassen, ob sich die Membran dem einen oder dem anderen Sensor angenähert hat. Außerdem ist jede Arbeitskammer jeweils mit einem Ausgang und einem Eingang verbunden. An den Aus- und Eingängen sind Ventile angeordnet, die der Steuerung einer Steuereinheit unterstehen, die wiederum mit den Sensoren verbunden ist. Die Steuereinheit steuert den Fluidzutritt und Auslast zu den Arbeitskammern nun so, dass sich die Arbeitskammern abwechselnd füllen und leeren. Aus der gemessenen Frequenz des Hin- und Herschwingens der Membran und dem bekannten Kammervolumen ergibt sich der Durchfluss.

Außerdem ist aus der WO 93/07389 eine Pumpeinrichtung bekannt, bei der die Pumpbewegung einer Kolbenpumpe über eine flexible Membran von einem ersten Hydraulikkreis auf einen zweiten Hydraulikkreis übertragen wird. Die Mittelposition der Membran kann sich dabei allmählich verändern, wenn ein in dem ersten Hydraulikkreislauf vorgesehenes Überdruckventil anspricht. Die Verlagerung der Membran wird durch einen Sensor und eine angeschlossene Steuereinrichtung erfasst, die über ein Magnetventil im geeigneten Moment Fluid in den Primärhydraulikkreislauf nachfüllt.

Daraus leitet sich die der Erfindung zugrunde liegende Aufgabe ab, ein robusten kostengünstigen Durchflussfühler zu schaffen.

Diese Aufgabe wird mit dem Durchflussfühler gemäß Patentanspruch 1 gelöst.

Der Durchflussfühler weist ein Gehäuse mit einem Durchgangskanal auf, der an wenigstens einer Stelle etwas verengt ist. Der Durchflusskanal wird von dem zu erfassenden Wasserstrom durchströmt. An der mit geringerem Durchlassquerschnitt ausgebildeten Stelle ist die Strömungsgeschwindigkeit höher als in den übrigen Bereichen des Durchgangskanals. Die Verengung ist als Venturidüse ausgebildet. In der verengten Stelle kann ein zylindrischer Abschnitt vorgesehen werden, in dem sich die Strömungsgeschwindigkeit des Wasserstroms bei konstanter Wassermenge nicht ändert.

In dem Gehäuse ist außerdem in einem eigens ausgebildeten Innenraum eine Membran angeordnet, die den Innenraum in zwei Kammern unterteilt. Die Membran wird mit einer Druckdifferenz beaufschlagt, die aus den sich in dem Durchgangskanal ergebenden unterschiedlichen Strömungsgeschwindigkeiten hergeleitet ist. Dadurch erfährt die Membran eine strömungsgeschwindigkeitsabhängige Auslenkung. Die Membran trägt einen Magneten, der ein außerhalb des Innenraums angeordnetes und von Wasser nicht berührtes Sensorelement beeinflusst. Verlagerungen der Membran entsprechen somit der Fließgeschwindigkeit des Wassers oder eines sonstigen Fluids und können somit von dem Sensorelement erfasst werden. Dies ohne mechanische Bewegungsübertragung aus dem Gehäuseinnenraum auf das Sensorelement. Mechanische Durchführungseinrichtungen oder dgl. reibungsbehafteten und leckageanfällige Elemente sind nicht vorhanden.

Das Sensorelement ist vorzugsweise ein Schaltelement, bspw. ein Reed-Relais. Das Schaltelement weist eine gewisse Schalthysterese auf und legt somit voneinander verschiedene Ein- und Ausschaltpunkte fest. Dies stellt definiertes Schalten des Durchflussfühlers sicher, der somit als Wasserschalter eingesetzt werden kann. Dieser schaltet ein elektrisches Signal um, wenn ein Einschaltwert überschritten ist und schaltet das elektrische Signal zurück, wenn ein Abschaltwert unterschritten ist. Der Einschaltwert und der Abschaltwert können relativ nahe beieinander liegen. Bei dem erfindungsgemäßen Durchflussfühler kann die Größe der Schalthysterese durch die Wahl der Membran beeinflusst werden. Eine nachgiebigere Membran führt zu einer geringeren Schalthysterese.

Überraschenderweise folgt die Auslenkung der Membran, obwohl die Membran ansonsten mit keinerlei Einstellmitteln in Verbindung steht, d.h. weder federnd vorgespannt ist noch eine justierbare Aufhängung oder dgl. aufweist, den Durchflussänderungen so präzise, dass keine mechanische Justage an dem Schaltelement vorzusehen ist. Eine bedarfsweise erfolgende Einstellung der Schaltpunkte kann allein durch Beeinflussung wenigstens eines der vorhandenen Steuerkanäle erfolgen, die die Druckdifferenz zwischen den Kammern steuern.

Ein Reed-Relais als Schaltelement hat sich als besonders vorteilhaft erwiesen. Zur Betätigung sind nahezu keine nennenswerten Kräfte erforderlich. Dies ermöglicht die Minimierung der Baugröße der Membran sowie der Rückwirkungen des Schalters auf die Membran.

Das vorteilhafterweise als Sensorelement verwendete Reed-Relais ist vorzugsweise an der Außenseite des Gehäuses befestigt. Bspw. kann es mit seinem Glasrohr zwischen an dem Gehäuse ausgebildeten Stegen im Rast- oder Klemmsitz gehalten sein. Dies ermöglicht eine besonders einfache Fertigung und zugleich eine sichere Unterbringung des Relais. Zur Kontaktierung des Relais können gleichfalls zwischen Stegen oder in Einschubfächern gehaltene Steckkontakte dienen, die mit den Anschlüssen des Relais verlötet oder anderweitig elektrisch verbunden sind. Bei einer vorteilhaften Ausführungsform sind die Anschlüsse des Relais mit den Steckkontakten lötfrei verbunden, bspw. durch Schneid-Klemmkontakte oder Crimpkontakte. Dies ermöglicht die Kontaktierung der Reed-Kontaktanschlüsse schon beim Eindrücken des Reed-Relais in den zwischen den Gehäusestegen vorgesehenen Zwischenraum. Mit der gleichen Bewegung können die Anschlüsse in Schlitze der Steckkontakte eingedrückt werden.

Der Durchflussfühler weist vorzugsweise ein Stellmittel zur Einstellung des Maximaldurchflusses und ein davon getrenntes Stellmittel zur Einstellung eines Ansprechpunkts des Sensorelements auf. Der Ansprechpunkt ist, zumindest wenn das Sensorelement durch einen Schalter gebildet ist, ein Schaltpunkt. Zur Einstellung des Maximaldurchflusses dient bspw. eine verstellbare Drossel, die in den Durchgangskanal verstellbar verengt. Bspw. kann dazu eine Drosselschraube dienen, die quer zu dem zylindrischen Abschnitt des Durchgangskanals verstellbar in diesen hinein und aus diesem heraus geschraubt werden kann. Bedarfsweise können auch anderweitige Drosselelemente vorgesehen werden.

Zu den Steuerkanälen gehört ein erster Kanal, der in einer Engstelle des Durchgangskanals von diesem abzweigt und an einer anderen Stelle wieder in den Durchgangskanal mündet. Dieser Steuerkanal steht mit einer der Kammern in Verbindung. Unmittelbar an dem Eingang des Durchgangskanals oder an sonstiger geeigneter Stelle kann ein verstellbares Ventil angeordnet sein, das bspw. durch eine Stellschraube gebildet wird. Dadurch ist der bei einer bestimmten Fließgeschwindigkeit in der zugeordneten Kammer erzeugte Unterdruck regulierbar. Dies dient der Einstellung des Schaltpunkts.

Ein weiterer Steuerkanal zweigt ebenfalls von der Engstelle des Durchgangskanals ab und führt zu der anderen Kammer, um diese mit einem von dem strömenden Wasser hervorgerufenen Unterdruck zu beaufschlagen. Bedarfsweise kann der Steuerkanal auch an einer anderen Stelle des Durchgangskanals abzweigen. Es wird jedoch bevorzugt, diesen insbesondere in der Nähe der zur Einstellung des Maximaldurchflusses vorgesehenen Drossel von dem Durchgangskanal abzweigen zu lassen. Dadurch ist auch bei fast vollständig gedrosseltem Durchgangskanal in der Nähe der Mündung des Steuerkanals eine hohe Strömungsgeschwindigkeit vorhanden, was ein Ansprechen des Durchflussfühlers auch dann sicher ermöglicht, wenn der Durchflussfühler auf geringe Maximaldurchflusswerte eingestellt ist.

Es ergibt sich dadurch ein Durchflussfühler, dessen Maximaldurchfluss in einem weiten Bereich von bspw. 0 bis 15 l/m oder mehr einstellbar ist. Der Schaltpunkt kann je nach eingestelltem Maximalstrom in dem gesamten zulässigen Bereich jeweils frei eingestellt werden.

Es hat sich als besonders zweckmäßig erwiesen, den Durchflussfühler in Verbindung mit einem Durchflussregler einzusetzen, der dem Durchflussfühler vor- oder nachgeschaltet sein kann. Der Durchflussregler, bspw. eine von dem Wasserdruck gesteuerte Drossel, begrenzt den Durchfluss auf einen druckunabhängigen Wert. Dieser wird dann so eingestellt, dass an der in dem Durchflussfühler vorhanden Drossel keine zu großen Druckdifferenzen auftreten können. Dies vermeidet Kavitationsgeräusche an der Drosseleinrichtung des Durchflussfühlers.

Die Steuerung der Druckdifferenz in den beiden Kammern erfolgt durch die Steuerkanäle, von denen der erste durchströmbar ausgebildet ist und von einer vorzugsweise stromaufwärts gelegenen Engstelle abzweigt sowie vorzugsweise an einer stromabwärtig gelegenen nicht so engen Stelle wieder in den Durchgangskanal mündet. Der zweite Kanal zweigt bspw. von einer Engstelle ab und ist vorzugsweise nicht durchströmbar, sondern führt nur in die Kammer.

Die Regulierschrauben sind vorzugsweise selbstdichtend ausgebildet. Dies kann durch an dem jeweiligen Schraubenkopf vorgesehene O-Ringe erfolgen, die gegen die zylindrische Wandung einer Bohrung abdichten, in der der Schraubenkopf sitzt. Dies ergibt eine sehr einfache Herstellung und Montage.

Das Gehäuse ist vorzugsweise lediglich zweiteilig ausgebildet, d.h. es wird von einem Gehäuseteil und einem Deckel gebildet. Das Gehäuse umschließt den Durchgangskanal, in dem eine Verengung, bspw. als Venturidüse, ausgebildet ist. Dies ist somit Bestandteil des Gehäuses. Außerdem sind in dem Gehäuseteil die Steuerkanäle und eine Kammer ausgebildet, die von der Membran verschlossen wird. Die auf der anderen Seite der Membran liegende Kammer wird bspw. von dem Gehäusedeckel definiert, der vorzugsweise die elektrischen Komponenten, d.h. das Sensorelement und dessen Anschlusseinrichtung trägt.

Die Gehäuseteile sind vorzugsweise aus Kunststoff, insbesondere unterschiedlichen Kunststoffen ausgebildet. Es hat sich als vorteilhaft erwiesen, den Deckel bspw. aus PPS und das übrige Gehäuse aus PA zu fertigen. In beide Kunststoffe kann Gewinde geschnitten werden. Dies eröffnet die Möglichkeit, die vorhandenen Stellschrauben mit selbstschneidenden Gewinden zu versehen, was die Fertigung erheblich vereinfacht. Die Stellschrauben werden bei der Herstellung und Montage des Durchflussfühlers in glatte Bohrungen eingeschraubt, wobei sie sich ihr Gewinde selbst schaffen. Die Stellschrauben sind auch dadurch einigermaßen schwergängig, so dass eine eingestellte Justage auf Dauer erhalten bleibt.

Die Gehäusehälften werden gegeneinander durch die Membran abgedichtet. Diese ist an ihrem Rand vorzugsweise mit einer Wulst versehen, die als Dichtung wirkt. Der Wulst sitzt vorzugweise quetschfrei in einer entsprechenden zwischen dem Deckel und dem anderen Gehäuseteil gebildeten Aufnahmeraum. Zur Abdichtung dienen schmale ringförmige Dichtflächen des Deckels und des anderen Gehäuseteils. In Deckelaufsetzrichtung, d.h. in Richtung der Flächennormalen der Membran ist der Dichtungswulst nicht gequetscht, d.h. der Aufnahmeraum ist größer als der vorhandene Wulst. Die Dichtung erfolgt durch Anlage des Wulsts an den Dichtungsflächen der Gehäuseteile in Radialrichtung. Die Dichtungsfläche ist parallel zu der Aufsetzrichtung des Deckels orientiert.

Im übrigen wirkt die Membran etwas federnd. Dies ermöglicht eine besonders einfache Befestigung des Deckelteils an dem übrigen Gehäuse. Dazu können Metallklammern dienen, die den Deckel gegen das Gehäuse spannen. Die Klammern können mit dem Gehäuse in Rastverbindung stehen oder entsprechend plastisch verformt sein. Die Werkstoffpaarung PPS und PA bei der Herstellung des Gehäuses ermöglicht es, an dem einen Gehäuseteil eine plastische Verformung hervorzurufen, während der andere Gehäuseteil eine eher elastische Deformation erfährt. In Verbindung mit der Elastizität der zwischen den Gehäuseteilen eingeklemmten Membran und der Restelastizität der Metallklammern ergibt sich ein dauerhaft dichter Sitz der unempfindlich gegen Druckstöße oder Alterung ist.

Die Membran ist in dem Gehäuse vorzugsweise relativ schlaff, d.h. zugspannungsarm gehalten. Der Auslenkung der Membran wirken somit nur geringe Kräfte entgegen. Insbesondere geringe Druckdifferenzen können schon zu einer merklichen Auslenkung der Membran führen, was eine hohe Empfindlichkeit oder entsprechend niedrige Ansprechschwellen ermöglicht.

Der von der Membran getragene Magnet ist vorzugsweise von einer an der Membran ausgebildeten Kammer eingeschlossen. Der Magnet wird dazu bspw. in die zunächst offene Kammer eingesetzt, die danach verschweißt wird.

Vorteilhafte Einzelheiten von Ausführungsformen der Erfindung sind Gegenstand von Unteransprüchen, der Zeichnung oder der nachfolgenden Beschreibung.

In der Zeichnung ist ein Ausführungsbeispiel der Erfindung veranschaulicht. Es zeigen:
Fig. 1 einen als Wasserschalter ausgebildeten Durchflussfühler, in perspektivischer Gesamtansicht und etwas vergrößerter Darstellung,
Fig. 2 den Wasserschalter nach Figur 1, in perspektivischer Explosionsdarstellung,
Fig. 3 den Wasserschalter nach den Figuren 1 und 2, in längsgeschnittener Darstellung, und
Fig. 4 den Wasserschalter nach den Figuren 1 bis 3, in Querschnittsdarstellung.

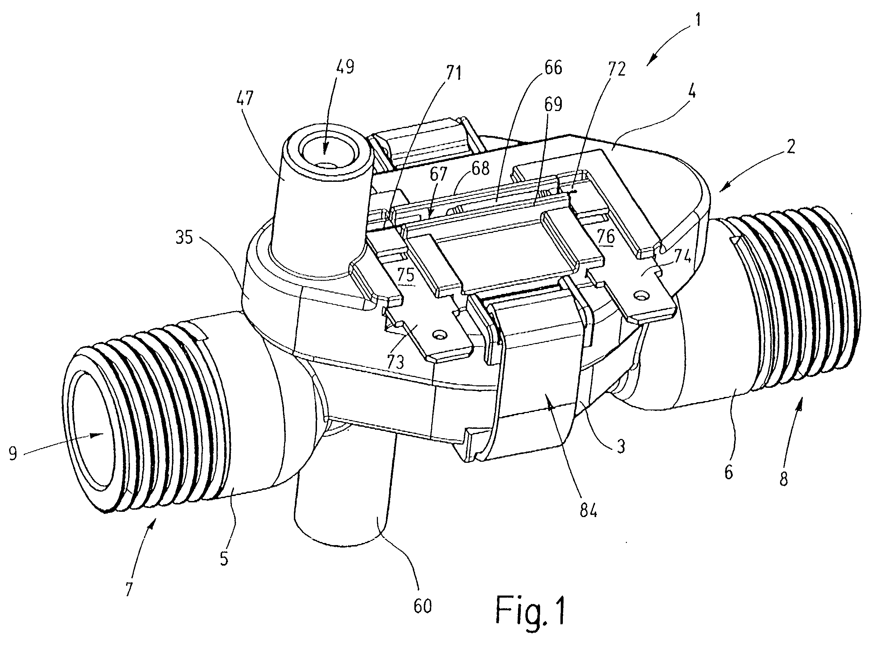

In Figur 1 ist ein Wasserschalter 1 veranschaulicht, der zum Einbau in Rohrleitungen vorgesehen ist und der ein elektrisches Signal abgeben soll, wenn die in der Rohrleitung vorhandene Wasserströmung einen eingestellten Grenzwert übersteigt. Der Wasserschalter 1 weist ein Gehäuse 2 auf, das in ein Grundgehäuse 3 und einen Deckel 4 unterteilt ist. Das Grundgehäuse 3 ist mit zwei einander gegenüberliegend angeordneten Anschlüssen 5, 6 versehen, die miteinander fluchten. Der Anschluss 5 bildet den Eingang, während der Anschluss 6 als Ausgang dient. Beide sind an ihrer Außenseite mit einem Konusgewinde 7, 8 versehen. Das Grundgehäuse 3 ist aus Kunststoff ausgebildet. Die Konusgewinde 7, 8 sind somit selbstdichtend.

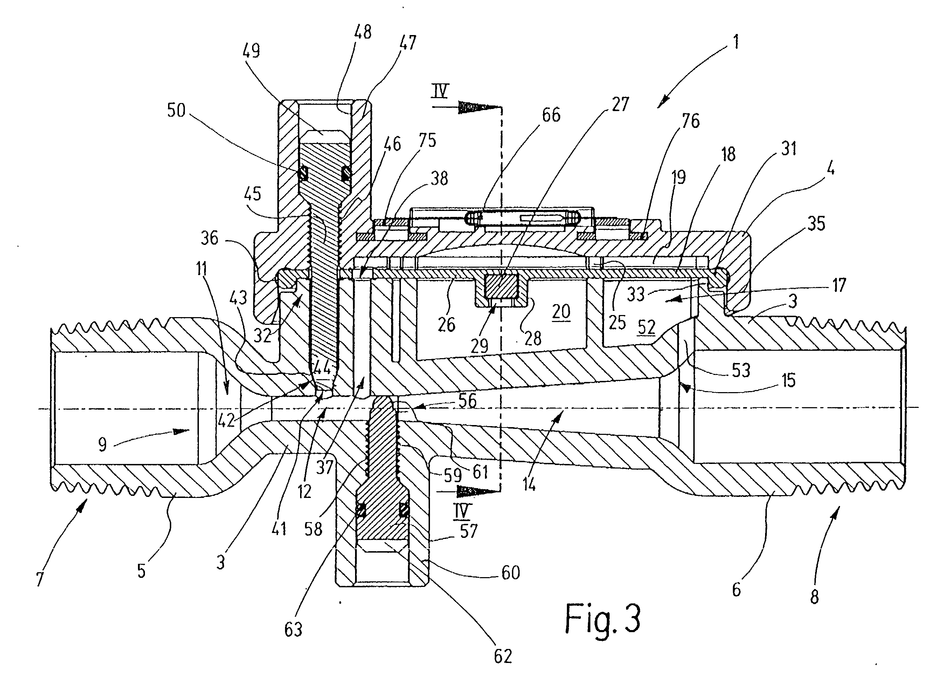

Zwischen den Anschlüssen 5, 6 ist, wie insbesondere aus Figur 3 hervorgeht, ein Durchgangskanal 9 ausgebildet, der ausgehend von einem zylindrischen Abschnitt großen Durchmessers sich über einen Venturidüsenabschnitt 11 zu einem zylindrischen Verbindungskanal 12 verengt. Im Anschluss an diesen ist ein Diffusorabschnitt 14 vorgesehen, in dem der Strömungsquerschnitt ausgehend von dem zylindrischen Verbindungskanal 12 allmählich auf den ursprünglichen Querschnitt erhöht wird. Damit ist an dem Anschluss 5 der gleiche Strömungsquerschnitt wie an dem Anschluss 6 vorhanden.

Zur Erfassung der Strömungsgeschwindigkeit anhand der unterschiedlichen Drücke in dem Verbindungskanal 12 und einer anderen Stelle des Durchgangskanals 9, bspw. in einem Endbereich 15 des Diffusorabschnitts 14 dient eine in einem Innenraum 17 angeordnete Membran 18. Der Innenraum 17 ist von dem Grundgehäuse 3 und dem Deckel 4 begrenzt. Durch die Membran 18 ist der Innenraum 17 in zwei Kammern 19, 20 unterteilt, die von der Membran 18 gegeneinander abgedichtet sind.

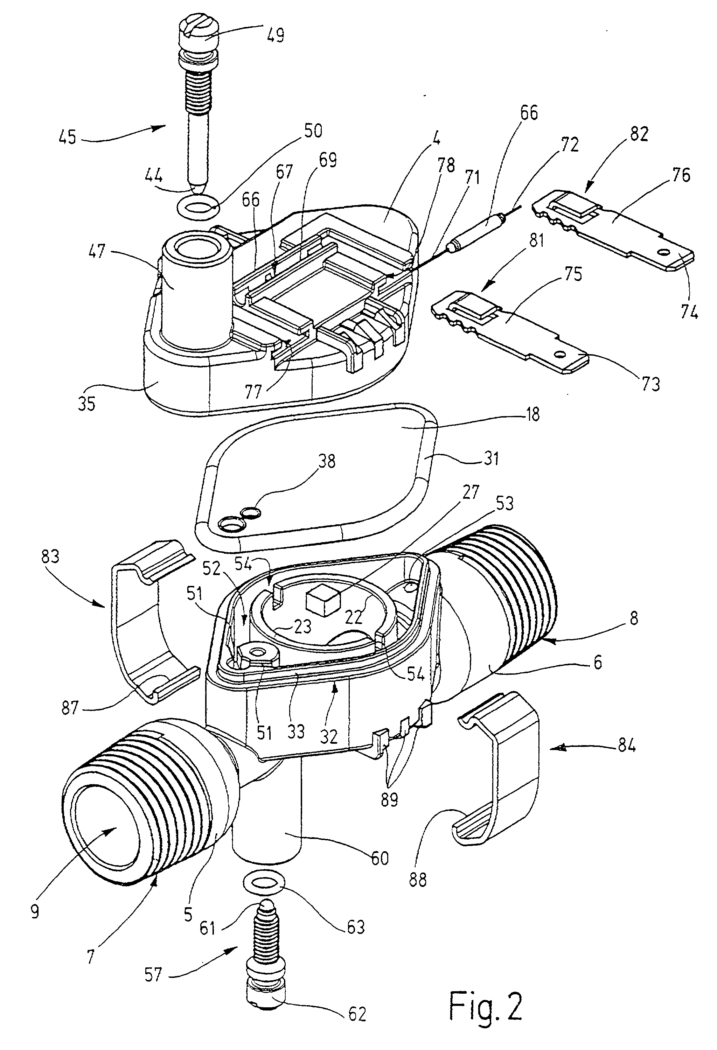

Wie insbesondere aus Figur 2 hervorgeht, ist in der Kammer 17 eine einen Hohlzylinder festlegende Stützwand 22 angeordnet, die einstückig mit dem Grundgehäuse 3 verbunden ist. Die Stützwand 22 weist an ihrer der Membran zugewandten Seite eine kreisringförmige Stirnfläche 23 auf, die als Auflagefläche für die Membran 18 dient. An dem Deckel 4 ist in der Kammer 19 koaxial und fluchtend zu der Stützwand 22 ein ringförmiger Stützsteg 25 ausgebildet, der an seiner Unterseite eine der Stirnfläche 23 zugewandte Fläche aufweist. Die Membran 18 wird zwischen dieser Fläche und der Stirnfläche 23 geklemmt, wenn der Deckel 4 auf das Grundgehäuse 3 aufgesetzt und gegen dieses gespannt ist. Die Stützwand 22 und der Stützsteg 25 legen einen kreisförmigen Abschnitt 26 der Membran 18 fest, der infolge von Druckdifferenzen zwischen der Kammer 19 und der Kammer 20 auslenkbar ist. Der übrige Teil der Membran 18 führt keine für die Messwerterfassung wesentliche Bewegung aus.

Der kreisförmige Abschnitt 26 der Membran 18 trägt einen Permanentmagneten 27 in einer dazu an dem Abschnitt 26 ausgebildeten Tasche 28. Die Tasche weist eine Öffnung 29 auf, deren lichte Weite kleiner ist als der Durchmesser des Permanentmagneten. Ist dieser in die Tasche 28 eingesetzt, ist er spielfrei und unverlierbar in dieser gehalten. Zusätzlich kann die Öffnung 29 verschlossen werden, in dem sie bspw. mit einem aus Membranmaterial bestehenden Stück verschweißt oder versiegelt wird.

Die Membran 18 ist an ihrem äußeren Rand mit einem rundumlaufenden Wulst 31 versehen, der in entspanntem Zustand einen kreisförmigen Querschnitt aufweist. Der Wulst steht einseitig über die Membran 18 vor. Seine Mittellinie ist somit gegen die Mitte der übrigen Membran 18 versetzt. Der Wulst 31 dient der Abdichtung des Deckels 4 gegen das Grundgehäuse 3. Dazu weist das Grundgehäuse 3 einen der Form der Membran 18 angepassten Gehäuserand 32 auf, an dem eine randoffene Ausnehmung umläuft. Diese weist eine nach außen weisende ringförmige Dichtungsfläche 33 auf, die in einer parallel zu der Flächennormalen der Membran 18 verlaufenden Richtung ausgerichtet ist.

Der Deckel 4 weist einen den Gehäuserand 32 übergreifenden Deckelrand 35 auf, der an seiner Innenseite eine parallel zu der Dichtungsfläche 33 ausgerichtete ringförmige Dichtungsfläche 36 aufweist. Der Abstand zwischen der Dichtungsfläche 33 und der Dichtungsfläche 36 ist etwas geringer als der Durchmesser der Wulst 31. In der Normalenrichtung der Membran 18 ist die zwischen dem Deckelrand 35 und dem Gehäuserand 32 gebildete Ausnehmung jedoch größer als der Wulst 31, so dass diese quetschfrei zwischen die beiden Dichtungsflächen 33, 36 findet.

Zur Druckbeaufschlagung der Kammer 19 dient ein Steuerkanal 37, der aus dem Verbindungskanal 12 vorzugsweise rechtwinklig abzweigt. Sein Durchmesser ist vorzugsweise etwas geringer als der des Verbindungskanals 12. Der Steuerkanal 37 führt durch das Grundgehäuse 3 bis zu der Membran 18, die hier eine mit dem Steuerkanal 37 fluchtende Durchgangsöffnung 38 aufweist. Der Rand der Durchgangsöffnung 38 dichtet unter dem Druck des Deckels 4 gegen den den Kanal 37 umgebenden, an dem Grundgehäuse 3 ausgebildeten Rand und vermeidet somit einen Druckübergang zu der Kammer 20. Durch die Durchgangsöffnung 38 und den Steuerkanal 37 kommuniziert die Kammer 19 jedoch mit dem Verbindungskanal 12 und erhält den hier vorhanden statischen Druck.

Zur Druckbeaufschlagung der Kammer 20 ist ein weiterer Steuerkanal 41 vorgesehen, der ebenfalls von dem Verbindungskanal 12 abzweigt und in dem Übergangsbereich 15 wieder in den Durchgangskanal 9 mündet. Der Steuerkanal 41 führt dabei zunächst zu einem Einstellventil 42, das durch eine konische, an dem Grundgehäuse 3 ausgebildete Ventilsitzfläche 43 und eine dieser zugeordnete Kegelspitze 44 einer Regulierschraube 45 gebildet wird. Die Regulierschraube 45 weist ein selbstschneidendes Gewinde 46 auf, das sich in die Wandung einer in dem Deckel 4 vorgesehenen Zylinderbohrung schneidet. Im Anschluss an diese Zylinderbohrung ist an dem Deckel 4 ein rohrförmiger Fortsatz 47 ausgebildet, der eine zylinderförmige innere Wandung 48 aufweist. Die Regulierschraube 45 weist einen Kopf 49 auf, der in dem rohrförmigen Fortsatz 47 sitzt und gegen dessen Innenwandung 48 mit einem O-Ring 50 abgedichtet ist.

Die Regulierschraube 45 erstreckt sich durch eine in der Membran 18 vorgesehenen Öffnung, wobei sie zu der Wandung der sich hier fortsetzenden Bohrung durch das Grundgehäuse 3 einen Ringspalt freilässt. Dieser bildet den sich an das Einstellventil 42 anschließenden Teil des Steuerkanals 37.

Wie aus Figur 2 hervorgeht, ist die Bohrung mit einem seitlichen Schlitz 51 versehen, der in eine die Stützwand 22 umgebende Kammer 52 führt. Diese Kammer 52 steht über eine Öffnung 53 mit dem Übergangsbereich 15 des Durchgangskanals 9 in Verbindung. In der Stützwand 22 sind ein oder mehrere Durchbrüche oder Ausnehmungen 54 ausgebildet, die die Kammer 20 mit der Kammer 52 kommunizieren lassen.

Zur Einstellung des maximalen Durchsatzes durch den Wasserschalter 1 ist der Durchgangskanal 9 mit einer Drosseleinrichtung 56 versehen. Diese wird vorzugsweise durch eine Stellschraube 57 gebildet, die ein selbstschneidendes Gewinde 58 aufweist und mit diesem in eine zylindrische Bohrung 59 des Grundgehäuses 3 eingeschraubt ist. Die Bohrung 59 führt aus einem rohrförmigen Fortsatz 60 zu dem Verbindungskanal 12. Die Stellschraube 57 weist an ihrem in dem Verbindungskanal 12 ragenden Ende ein halbkugelförmiges Ende 61 auf. Der Radius des halbkugelförmigen Endes 61 der Stellschraube 57 stimmt mit dem Radius des Verbindungskanals überein oder ist etwas geringer.

Die Stellschraube 57 weist einen zylindrischen Kopf 62 auf, der mit einer Ringnut zur Aufnahme eines 0-Rings 63 versehen ist. Dieser dichtet gegen die innere zylindrische Wandung des rohrförmigen Fortsatzes 60 ab.

An dem Deckel 4 ist, wie aus den Figuren 1 und 2 hervorgeht, ein durch einen Reed-Kontakt gebildetes elektrisches Relais 66 gehalten. Der Deckel 4 weist dazu zwei zwischen einander einen Aufnahmeraum 67 begrenzende Stege 68, 69 auf, die parallel zueinander ausgerichtet sind. Das Relais 66 wird wie Figur 1 veranschaulicht, in dem Aufnahmeraum 67 so angeordnet, dass es möglichst nahe bei dem Permanentmagneten 27 steht. Dabei sind die Stärken des Magneten 27 und der Abstand zu dem Relais 66 so bemessen, dass die Kontakte des Relais 66 keine Berührung haben, wenn die Membran 18 bzw. ihr Abschnitt 26 nicht ausgelenkt, d.h. der Druck in den Kammern 19, 20 gleich ist. Das Relais 66 ist zwischen den Stegen 68, 69 im Klemmsitz gehalten.

Seine Anschlüsse 71, 72 sind elektrisch mit Steckkontakten 73, 74 verbunden, die an Kontaktblechen 75, 76 ausgebildet sind. Die Kontaktbleche 75, 76 sind flache Blechzuschnitte, die an ihrem Rand an einem in Aufnahmenuten 77, 78 des Deckels 4 einzuschiebenden Teil gezahnt ausgebildet sind. Die Zähnung gestattet ein Einschieben der Kontaktbleche 75, 76 in die Aufnahmenuten 77, 78, wobei sich die Ränder der Kontaktbleche 75, 76 mit den Nuträndern verhaken. Ein Wiederherausziehen der Kontaktbleche 75, 76 aus den Aufnahmenuten 77, 78 ist somit nicht möglich.

In Figur 2 lediglich schematisch angedeutet sind an den Kontaktblechen 75, 76 Anschlussmittel 81, 82 ausgebildet. Diese können, wie dargestellt, Biegelaschen sein, die mit den Anschlüssen 71, 72 des Relais 76 verpresst werden. Außerdem kommen Schneidklemmschlitze oder Lötverbindungen in Frage.

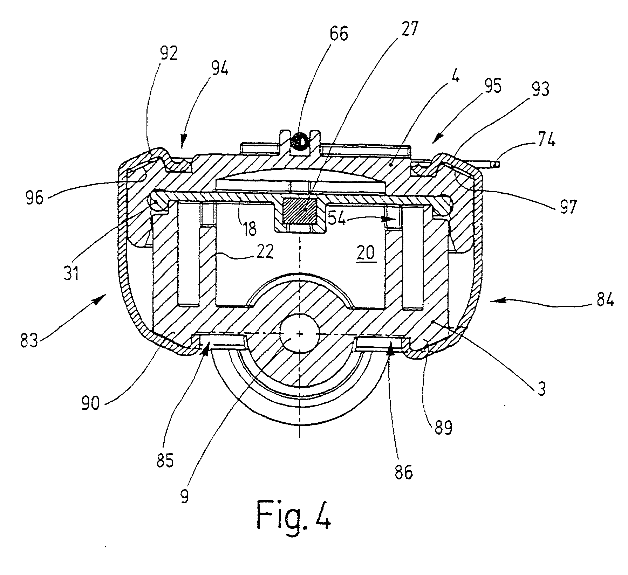

Zur Befestigung des Deckels 4 an dem Grundgehäuse 3 dienen Metallklammern 83, 84, die insbesondere aus Figur 2 und Figur 4 hervorgehen. An dem Grundgehäuse 3 sind an der dem Deckel 4 abgewandten Seite flache Ausnehmungen 85, 86 ausgebildet, in die hakenartig ausgebildete Enden 87, 88 der Metallklammern 83, 84 einhängbar sind. Von hier ausgehend erstrecken sich drei stegartige Anlagebereiche 89, 90 bis zu der Außenseite des Grundgehäuses 3.

Ausgehend von der Unterseite des Grundgehäuses 3 erstrecken sich die Metallklammern 83, 84 zunächst im Bogen und dann gestreckt in Richtung auf den Deckel 4 zu und bis zu dessen Oberseite. Hier sind die Federklammern nach innen abgewinkelt und bilden mit ihren Enden 92, 93 Rastfinger. Diesen sind Rastausnehmungen 94, 95 in dem Deckel 4 zugeordnet. An die Rastausnehmung 94, 95 schließt sich nach außen eine Schrägfläche 96, 97 an, die dem Rastfinger jeder Metallklammer 83, 84 in die Rastausnehmung 94, 95 führt, wenn die Metallklammer von außen auf den Deckel 4 aufgeschoben wird.

Das Gehäuse 2 ist aus Kunststoff hergestellt. Das Grundgehäuse 3 ist vorzugsweise aus PA (Polyamid) gefertigt und kann sich unter der Einwirkung der Metallklammer 83, 84 etwas plastisch verformen. Der Deckel ist vorzugsweise aus PPS (Polypropylensulfid) gefertigt und unterliegt einer eher elastischen Verformung. Die Membran 18 ergibt eine zusätzliche Federwirkung zwischen dem Deckel 4 und dem Grundgehäuse 3. Dadurch kann auch mit Metallklammern 83, 84, die nur geringe Federwirkung haben, eine dauerhaft dichte, unter Spannung stehende Verbindung zwischen dem Deckel 4 und dem Grundgehäuse 3 erreicht werden. Dies auch, wenn die C-förmig gebogenen Metallklammern 83, 84 auch nach Ansetzen an das Gehäuse 2 zusammengebogen oder mit dem Gehäuse 2 verpresst worden sind.

Der insoweit beschriebene Wasserschalter arbeitet wie folgt:

Der Wasserschalter 1 ist mit seinen Anschlüssen 5, 6 an eine Rohrleitung angeschlossen, die mit Wasser gefüllt ist. Mit Wasser gefüllt sind auch die Kammern 19, 20 des Wasserschalters 1. Ist kein Wasserfluss vorhanden, ist in beiden Kammern 19, 20 der jeweils gleiche Druck vorhanden und der Abschnitt 26 der Membran wird nicht ausgelenkt.

Kommt nun ein Wasserfluss von dem Anschluss 5 zu dem Anschluss 6 durch den Durchgangskanal zustande, entsteht in der Kammer 19 über den Steuerkanal 37 ein verminderter Druck. Über den Steuerkanal 41 wird Wasser aus dem Übergangsbereich 15 (Öffnung 53) durch die Kammer 52 und die Einstellventil 42 in den Verbindungskanal 12 gesaugt. Je weiter das Einstellventil 42 geöffnet ist, desto stärker wird das Wasser über den Steuerkanal 41 aus der Kammer 52 und somit aus der Kammer 2 abgesaugt und desto geringer wird somit der Druckunterschied zwischen den Kammern 19 und 20. Je weiter das Einstellventil 42 geschlossen ist, desto geringer ist die Absaugung. Demzufolge nähert sich der Druck in der Kammer 20 dann eher dem statischen Druck des Übergangsbereichs 15 an.

Die Druckdifferenz zwischen der Kammer 19 und der Kammer 20 lenkt den Abschnitt 26 der Membran 18 in Richtung auf das Relais 66 hin aus. Ist die Ausienkung so groß, dass der Permanentmagnet 27 nahe genug an das Relais 66 herangekommen ist, um seine Kontakte zu schließen, ist der Schaltpunkt erreicht. Die Lage dieses Schaltpunkts ist durch Beeinflussung der Größer der Druckdifferenz bei gegebener Durchströmung mit der Regulierschraube 45 einstellbar.

Die maximale Durchströmung durch den Durchgangskanal 9 ist mit der Stellschraube 57 einstellbar. Je weiter diese aus dem Verbindungskanal 12 herausgeschraubt wird, desto größer wird der maximale zugelassene Wasserfluss. Es sind Maximalwerte zwischen 0 l/min und 15 l/m oder bei anderen Bauarten auch größeren Werten einstellbar.

In dem von der Stellschraube 57 begrenzten Bereich lässt sich der Schaltpunkt des Relais 66 mittels der Regulierschraube 45 auf jeden gewünschten Wert einstellen. Gibt die Regulierschraube 45 den Steuerkanal 41 frei, wirkt der in dem Verbindungskanal 12 herrschende Unterdruck relativ stark auf die Kammer 20, so dass entstehende Druckdifferenzen gering sind und der Wasserschalter erst bei relativ hohen Durchsätzen anspricht. Wird die Regulierschraube 45 so weit geschlossen, dass die Kegelspitze 44 auf dem Ventilsitz 43 aufsetzt, ist die erreichbare Druckdifferenz zwischen den Kammern 19 und 20 maximal und der Wasserschalter 1 hat seine maximale Empfindlichkeit.

Unabhängig von dem mit der Stellschraube 57 eingestellten Maximalbereich kann der Schaltpunkt des Relais 66 bspw. so eingestellt werden, dass ein Schließen der Relaiskontakte bei 2 l/m erfolgt und ein Abschalten bei 1 l/m. Die Hysterese gestattet eine besonders einfache Auslegung der an den Wasserschalter 1 angeschlossenen Regeleinrichtung zur Freigabe und Regulierung einer Gasströmung, bspw. eines Durchlauferhitzers.

Bei einer vorteilhaften Ausführungsform ist das Material der elastischen Membran 18 so ausgewählt, dass zusammen mit dem Permanentmagneten 27 ein Gewicht erreicht wird, das im Wesentlichen mit dem Gewicht der verdrängten Wassermenge übereinstimmt. Die Membran schwebt dadurch zwischen den Kammern 19, 20 und erhält weder einen Auftrieb noch hängt sich unter ihrem Gewicht durch. Selbst bei einer sehr schlaffen, ohne Spannung eingebauten Membran ergibt sich dadurch eine lageunabhängige Betriebsweise. Dies ermöglicht es, den Wasserschalter 1 vormontiert und vorjustiert auszuliefern, wobei die Justage unabhängig von der späteren Einbaulage des Wasserschalters gültig ist. Dieser Effekt wird auch schon erreicht, wenn die Abweichungen zwischen der Dichte (g/cm³) der Membrane und der Dichte des in der Kammer vorhandenen Fluids (Wasser) nicht zu groß ist.

Ein Wasserschalter 1 weist ein Gehäuse 2 auf, in dem ein Durchgangskanal mit einer Venturidüse ausgebildet ist. Von der Venturidüse und dem sonstigen Durchgangskanal ausgehende Steuerkanäle führen zu in das Gehäuse integrierten Kammern, die durch eine Membran voneinander getrennt sind. Auslenkungen der Membran werden über einen mit der Membran verbundenen, in dem Gehäuse befindlichen Magneten und einen außerhalb des Gehäuses angeordneten Sensor erfasst. Als Sensor wird vorzugsweise ein Reed-Kontakt verwendet.

## Patentansprüche

1. Durchflussfühler (1), insbesondere zur Erfassung von Wasserströmen,
mit einem Gehäuse (2), in dem ein Durchgangskanal (9) und ein Innenraum (17) ausgebildet sind, der durch eine Membran (18) in zwei Kammern (19, 20) unterteilt ist, die über Steuerkanäle (37, 41) mit dem Durchlasskanal (9) kommunizieren,
mit einer an der Membran (18) befestigten Magneten (27), der von der Membran (18) getragen und positioniert ist, und
mit einem außerhalb des Innenraums (17) angeordneten, auf die Verlagerung des Magneten (27) reagierenden Sensorelement (66),
**dadurch gekennzeichnet,**
**dass** der Durchgangskanal (9) als Venturidüse ausgebildet ist, die eine Engstelle bildet, und
**dass** von der Engstelle der Venturidüse ein Steuerkanal (41) abzweigt, der mit einer (20) der Kammern (19, 20) verbunden ist.

2. Durchflussfühler nach Anspruch 1, **dadurch gekennzeichnet, dass** das Sensorelement (66) ein Reed-Relais ist.

3. Durchflussfühler nach Anspruch 2, **dadurch gekennzeichnet, dass** das Reed-Relais an einer Außenseite des Gehäuses (2) befestigt ist.

4. Durchflussfühler nach Anspruch 3, **dadurch gekennzeichnet, dass** das Reed-Relais zwischen an dem Gehäuse (2) ausgebildeten Stegen (68, 69) vorzugsweise im Klemmsitz gehalten ist.

5. Durchflussfühler nach Anspruch 2, **dadurch gekennzeichnet, dass** an dem Gehäuse (2) vorzugsweise als Steckkontakte (73, 74) ausgebildete Anschlussmittel befestigt sind, an die an dem Reed-Relais (66) vorhandene Anschlüsse (71, 72) in Klemm-Technik, in Crimp-Technik oder in Schneid-Klemm-Technik angeschlossen sind.

6. Durchflussfühler nach Anspruch 1, **dadurch gekennzeichnet, dass** der Durchflussfühler (1) ein Stellmittel (57) zur Einstellung des Maximaldurchflusses und ein davon getrenntes Stellmittel (45) zur Einstellung eines Ansprechpunktes des Sensorelements (66) aufweist, wobei der Ansprechpunkt, wenn das Sensorelement (66) durch einen Schalter gebildet ist, ein Schaltpunkt ist.

7. Durchflussfühler nach Anspruch 1, **dadurch gekennzeichnet, dass** in dem Durchgangskanal (9), vorzugsweise in dem Kanalabschnitt (12) mit verengtem Durchlassquerschnitt zur Einstellung des Maximaldurchfluss eine verstellbare Drossel (56) angeordnet ist.

8. Durchflussfühler nach Anspruch 7, **dadurch gekennzeichnet, dass** die Drossel (56) eine quer zu dem Durchgangskanal (12) verstellbare Stellschraube (57) aufweist.

9. Durchflussfühler nach Anspruch 1, **dadurch gekennzeichnet, dass** der Steuerkanal (31, 41) an zwei Stellen unterschiedlichen Strömungsquerschnitts mit dem Durchgangskanal (9) verbunden ist.

10. Durchflussfühler nach Anspruch 9, **dadurch gekennzeichnet, dass** der Steuerkanal (41) zur Einstellung eines Ansprechpunkts des Sensorelements (66) mit einem Drosselmittel (42) versehen ist, das vorzugsweise durch ein Sitzventil gebildet ist, das in Nachbarschaft zu einer Einmündung des Steuerkanals (41) in den Durchgangskanal (9) angeordnet ist, wobei der Ansprechpunkt, wenn das Sensorelement (66) durch einen Schalter gebildet ist, ein Schaltpunkt ist.

11. Durchflussfühler nach Anspruch 10, **dadurch gekennzeichnet, dass** das Sitzventil durch ein Ende einer Regulierschraube (44) und eine entsprechende, in dem Steuerkanal (41) ausgebildete Sitzfläche (43) gebildet ist.

12. Durchflussfühler nach Anspruch 9, **dadurch gekennzeichnet, dass** zu den Steuerkanälen (37, 41) ein Steuerkanal (37) gehört, der den Durchgangskanal (9) mit der anderen Kammer (19) verbindet und der vorzugsweise von einer Stelle des Durchgangskanals (9) mit reduziertem Querschnitt abzweigt.

13. Durchflussfühler nach Anspruch 8 und 11, **dadurch gekennzeichnet, dass** die Stellschraube (57) und die Regulierschraube (45) an ihrem jeweiligen Kopf (62, 49) mit einem Dichtungsmittel, vorzugsweise einem O-Ring versehen sind, mit dem sie gegen eine zylindrische Wandung einer in dem Gehäuse (2) vorgesehenen Öffnung abgedichtet sind.

14. Durchflussfühler nach Anspruch 1, **dadurch gekennzeichnet, dass** das Gehäuse (2) zweiteilig ausgebildet ist.

15. Durchflussfühler nach Anspruch 14, **dadurch gekennzeichnet, dass** das Gehäuse (2) einen ersten Gehäuseteil (3) aufweist, in dem der Durchgangskanal (9), und eine (20) der Kammern (19, 20) ausgebildet ist, und dass das Gehäuse (2) einen zweiten Gehäuseteil (4) aufweist, der das Sensorelement (66) trägt und in dem die andere Kammer (19) ausgebildet ist, wobei die Membran (18) zischen dem ersten Gehäuseteil (3) und dem zweiten Gehäuseteil (4) gehalten ist.

16. Durchflussfühler nach Anspruch 1, **dadurch gekennzeichnet, dass** die Membran (18) einen rundumlaufenden wulstartigen Rand (31) aufweist, der zur Abdichtung der Gehäuseteile (3, 4) gegeneinander dient und für dessen Aufnahme zwischen den Gehäuseteilen (3, 4) ein Dichtungsraum ausgebildet ist, der durch zwei ringförmige, im Wesentlichen zylindrische und zueinander konzentrische Flächen (33, 36) begrenzt ist, zwischen denen der Rand der Membran (18) abdichtend sitzt.

17. Durchflussfühler nach Anspruch 1, **dadurch gekennzeichnet, dass** der Dichtungsraum parallel zu den Dichtungsflächen (33, 36) und somit in Aufsetzrichtung des zweiten Gehäuseteils größer ist als der Rand (31) der Membran.

18. Durchflussfühler nach Anspruch 1, **dadurch gekennzeichnet, dass** die Membran (18) in dem Gehäuse (2) schlaff gehalten ist.

19. Durchflussfühler nach Anspruch 1, **dadurch gekennzeichnet, dass** der Magnet (27) von der Membran eingeschlossen ist.

20. Durchflussfühler nach Anspruch 15, **dadurch gekennzeichnet, dass** die Gehäuseteile (3, 4) durch Klammern (83, 84) zusammengehalten sind.

21. Durchflussfühler nach Anspruch 20, **dadurch gekennzeichnet, dass** Abschnitte der Gehäuseteile (3, 4) und/oder der Klammern (83, 84) nach dem Zusammenbau der Gehäuseteile (3, 4) und dem Anbringen der Klammern (83, 84) plastisch verformt sind, wobei wenigstens von der Membran (18) eine elastische Spannung ausgeht.

## Claims

1. A flow sensor (1), in particular for detecting water flows,
having a housing (2) in which a flow passage (9) and an inner chamber (17) are formed, which is divided by a diaphragm (18) into two chambers (19,20) which communicate with the flow passage (9) via control passages (37,41),
having a magnet (27) which is fastened to the diaphragm (18) and which is carried and positioned by the diaphragm (18), and
having a sensor element (66) disposed outside the inner chamber (17) and reacting to the displacement of the magnet (27),
**characterised**
**in that** the flow passage (9) is in the form of a Venturi tube which defines a narrow point, and
**in that** a control passage (41) branches from the narrow point of the Venturi tube, which passage is connected to one (20) of the chambers (19,20).

2. A flow sensor according to Claim 1, **characterised in that** the sensor element (66) is a reed relay.

3. A flow sensor according to Claim 2, **characterised in that** the reed relay is mounted on an outer side of the housing (2).

4. A flow sensor according to Claim 3, **characterised in that** the reed relay is retained between webs (68,69) formed in the housing (2), preferably in a force fit.

5. A flow sensor according to Claim 2, **characterised in that** connection means, preferably in the form of plug-type contacts (73,74), are secured to the housing (2), to which connection means terminals (71,72) provided on the reed relay (66) are connected in a clamping process, in a crimping process or in a cutting-clamping process.

6. A flow sensor according to Claim 1, **characterised** the flow sensor (1) has an adjusting means (57) for adjusting the maximum throughflow and an adjusting means (45) separate therefrom for adjusting a response point of the sensor element (66), wherein the response point is an operating point if the sensor element (66) is in the form of a switch.

7. A flow sensor according to Claim 1, **characterised in that** an adjustable throttle (56) is provided in the flow passage (9), preferably in the passage section (12) of restricted throughflow cross-section, for adjusting the maximum throughflow.

8. A flow sensor according to Claim 7, **characterised in that** the throttle (56) has a setting screw (57) adjustable transversely to the flow passage (12).

9. A flow sensor according to Claim 1, **characterised in that** the control passage (31,41) is connected with the flow passage (9) at two locations of different flow cross-section.

10. A flow sensor according to Claim 9, **characterised in that** the control passage (41) for adjusting a response point of the sensor element (66) is provided with a throttle means (42) which is preferably formed by a seating valve which is disposed in the vicinity of a mouth of the control passage (41) in the flow passage (9), wherein the response point is an operating point if the sensor element (66) is in the form of a switch.

11. A flow sensor according to Claim 10, **characterised in that** the seating valve is formed by one end of a regulating screw (44) and a corresponding seating surface (43) formed in the control passage (41).

12. A flow sensor according to Claim 9, **characterised in that** a control passage (37) belongs to the control passages (37,41), which connects the flow passage (9) to the other chamber (19) and which preferably branches from a location of the flow passage (9) of reduced cross-section.

13. A flow sensor according to Claims 8 and 11, **characterised in that** the setting screw (57) and the regulating screw (45) are provided on their respective head (62,49) with a sealing means, preferably an O-ring, by which they are sealed from a cylindrical wall of an opening provided in the housing (2).

14. A flow sensor according to Claim 1, **characterised in that** the housing (2) is formed in two parts.

15. A flow sensor according to Claim 14, **characterised in that** the housing (2) has a first housing part (3), in which the flow passage (9) and one (20) of the chambers (19,20) is formed, and **in that** the housing (2) has a second housing part (4) which carries the sensor element (66) and in which the other chamber (19) is formed, wherein the diaphragm (18) is retained between the first housing part (3) and the second housing part (4).

16. A flow sensor according to Claim 1, **characterised in that** the diaphragm (18) has a circumferential bead-type rim (31), which serves to effect mutual sealing of the housing parts (3,4), and is accommodated within a sealing chamber formed between the housing parts (3,4), which chamber is delimited by two annular substantially cylindrical and mutually concentric surfaces (33,36), between which the rim of the diaphragm (18) is fluidtightly seated.

17. A flow sensor according to Claim 1, **characterised in that** the sealing chamber is parallel to the sealing surfaces (33,36) and therefore in the mounting direction of the second housing part is larger than the rim (31) of the diaphragm.

18. A flow sensor according to Claim 1, **characterised in that** the diaphragm (18) is held loosely in the housing (2).

19. A flow sensor according to Claim 1, **characterised in that** the magnet (27) is enclosed by the diaphragm.

20. A flow sensor according to Claim 15, **characterised in that** the housing parts (3,4) are held together by clips (83,84).

21. A flow sensor according to Claim 20, **characterised in that** portions of the housing parts (3,4) and/or the clips (83,84) are plastically deformed after the assembly of the housing parts (3,4) and the application of the clips (83,84), wherein an elastic stress originates at least from the diaphragm (18).

## Revendications

1. Contrôleur de débit (1), en particulier pour la détection de débits d'eau,
avec un corps (2) dans lequel sont aménagés un canal d'écoulement (9) ainsi qu'une enceinte intérieure (17) divisée par une membrane (18) en deux chambres (19, 20), qui communiquent avec le canal d'écoulement (9) par l'intermédiaire de canaux de commande (37, 41),
avec un aimant (27) fixé à la membrane (18), qui est supporté et positionné par ladite membrane (18),
avec un élément senseur (66) disposé à l'extérieur de l'enceinte intérieure (17), qui réagit au déplacement de l'aimant (27),
**caractérisé en ce que** le canal d'écoulement (9) est conformé en tube de Venturi, qui forme un étranglement et
**en ce que** de l'étranglement du tube de Venturi part un canal de commande (41) qui est relié à l'une (20) des deux chambres (19, 20).

2. Contrôleur de débit selon la revendication 1, **caractérisé en ce que** l'élément senseur (66) est un relais Reed.

3. Contrôleur de débit selon la revendication 2, **caractérisé en ce que** le relais Reed est fixé sur une face extérieure du corps (2).

4. Contrôleur de débit selon la revendication 3, **caractérisé en ce que** le relais Reed est tenu, de préférence par serrage, entre des languettes (68, 69) aménagées sur le corps (2).

5. Contrôleur de débit selon la revendication 2, **caractérisé en ce que** sur le corps (2) sont fixés des moyens de connexion conformés de préférence en contacts enfichables, auxquels des liaisons (71, 72) prévues sur le relais Reed (66) sont connectées par serrage, pincement ou par liaison auto-dénudante.

6. Contrôleur de débit selon la revendication 1, **caractérisé en ce que** le contrôleur de débit (1) comporte un moyen de réglage (57) pour le réglage du débit maximal et un moyen de réglage (45) distinct du premier pour le réglage d'un point de réponse de l'élément senseur (66), le point de réponse étant un point de commutation, lorsque l'élément senseur est un commutateur.

7. Contrôleur de débit selon la revendication 1, **caractérisé en ce que** dans le canal d'écoulement (9), de préférence dans le tronçon de canal (12) à section de passage réduite est disposé un étranglement (56) réglable pour le réglage du débit maximal.

8. Contrôleur de débit selon la revendication 7, **caractérisé en ce que** l'étranglement (56) comprend une vis de réglage (57) déplaçable transversalement au canal d'écoulement (12).

9. Contrôleur de débit selon la revendication 1, **caractérisé en ce que** le canal de commande (31, 41) est connecté au canal d'écoulement (9) en deux points avec des sections de passage différentes.

10. Contrôleur de débit selon la revendication 9, **caractérisé en ce que** le canal de commande (41), pour le réglage d'un point de réponse de l'élément senseur (66), est pourvu d'un moyen d'étranglement (42) qui, de préférence, est formé d'une valve à siège disposée dans le voisinage d'une embouchure du canal de commande (41) dans le canal d'écoulement (9), le point de réponse étant un point de commutation, lorsque le l'élément senseur (66) est un commutateur.

11. Contrôleur de débit selon la revendication 10, **caractérisé en ce que** la valve à siège est formée par une extrémité d'une vis de régulation (44) et une surface formant siège (43) correspondante dans le canal de commande (41).

12. Contrôleur de débit selon la revendication 9, **caractérisé en ce que** les canaux de commande (37, 41) comprennent un canal de commande (37) qui relie le canal d'écoulement (9) à l'autre chambre (19) et qui part de préférence d'un point du canal d'écoulement (9) à section réduite.

13. Contrôleur de débit selon les revendications 8 et 11, **caractérisé en ce que** la vis de réglage (57) et la vis de régulation (45), au niveau de leur tête (62, 49), sont pourvues d'un moyen d'étanchéité, de préférence d'un joint torique, par lequel l'étanchéité par rapport à une paroi cylindrique d'une ouverture prévue dans le corps (2) est réalisée.

14. Contrôleur de débit selon la revendication 1, **caractérisé en ce que** le corps (2) est réalisé en deux parties.

15. Contrôleur de débit selon la revendication 14, **caractérisé en ce que** le corps (2) comporte une première partie de corps (3) dans laquelle sont aménagés le canal d'écoulement (9) et l'une (20) des chambres (19, 20) et **en ce que** le corps comprend une deuxième partie de corps (4) qui porte l'élément senseur (66) et dans laquelle est aménagée l'autre chambre (19), la membrane (18) étant tenue entre la première partie de corps (3) et la deuxième partie de corps (4).

16. Contrôleur de débit selon la revendication 1, **caractérisé en ce que** la membrane comporte un bord (31) continu en forme de bourrelet qui assure l'étanchéité entre les parties de corps (3, 4) et pour le montage duquel une chambre à joint est aménagée entre les parties de corps (3, 4), laquelle chambre à joint est délimitée par deux surfaces (33, 36) annulaires, essentiellement cylindriques et mutuellement concentriques, entre lesquelles le bord (31) de la membrane (18) est monté étanche.

17. Contrôleur de débit selon la revendication 1, **caractérisé en ce que** la chambre à joint est parallèle aux surfaces d'étanchéité (33, 36) et, dans la direction de montage de la deuxième partie de corps, est plus grande que le bord (31) de la membrane.

18. Contrôleur de débit selon la revendication 1, **caractérisé en ce que** la membrane (18) est tenue lâche dans le corps (2).

19. Contrôleur de débit selon la revendication 1, **caractérisé en ce que** l'aimant (27) est enfermé dans la membrane.

20. Contrôleur de débit selon la revendication 15, **caractérisé en ce que** les parties de corps (3, 4) sont maintenues assemblées par des agrafes (83, 84).

21. Contrôleur de débit selon la revendication 20, **caractérisé en ce que** des portions des parties de corps (3, 4) et/ou des agrafes (83, 84), après l'assemblage des parties de corps (3, 4) et la mise en place des agrafes (83, 84), sont déformées plastiquement, une contrainte élastique étant produite au moins par la membrane (18).
